# EUROPÄISCHE PATENTSCHRIFT

(11) **EP 1 130 360 B1**
(45) Veröffentlichungstag und Bekanntmachung des Hinweises auf die Patenterteilung: **06.01.2010**
(21) Anmeldenummer: 00124024.1
(22) Anmeldetag: 04.11.2000
(51) Int. Cl.: G01D 3/02

(54) **Sensor**
Sensor
Capteur

(30) Priorität: 30.12.1999 DE 19964002
(43) Veröffentlichungstag der Anmeldung: 05.09.2001
(73) Patentinhaber: Micronas GmbH, 79108 Freiburg i. Br. (DE)
(72) Erfinder: Motz, Mario Dipl. -Ing., 9241 Wernberg (DE)
(74) Vertreter: Patentanwälte Westphal, Mussgnug & Partner

(56) Entgegenhaltungen:
- DE-A1- 4 409 708
- DE-A1- 19 701 310
- PATENT ABSTRACTS OF JAPAN Bd. 005, Nr. 196 (P-093), 12. Dezember 1981 (1981-12-12) & JP 56 119858 A (HITACHI LTD), 19. September 1981 (1981-09-19)

## Beschreibung

Die Erfindung betrifft einen Sensor mit einer Wandlereinrichtung zum Umwandeln einer an ihr anliegenden physikalischen Größe in ein entsprechendes elektrisches Messsignal und einer der Wanderleinrichtung nachgeschalteten Signalaufbereitungseinrichtung zum Erzeugen eines Ausgangssignals aus dem Messsignal, wobei die Signalaufbereitungseinrichtung eine Schalteinrichtung zur Offsetkompensation aufweist.

Derartige Sensoren sind beispielsweise aus den Patentschriften DE 37 86 487 T2, US 4 951 236, US 4 982 351 und US 5 051 937 bekannt und zeichnen sich durch vielseitige Anwendbarkeit, hohe Genauigkeit und geringen Herstellungsaufwand aus. Erreicht wird dies insbesondere dadurch, dass der Wandlereinrichtung eine Signalaufbereitungseinrichtung nachgeschaltet ist und dass anstelle einer erheblichen Aufwand erfordernden Eichung und Signalkonditionierung bei der Wandlereinrichtung vorgesehen wird, Signalkonditionierung, Eichung und Anpassung an den jeweiligen Anwendungsfall bei der entsprechend ausgelegten Signalaufbereitungseinrichtung vorzunehmen. Signalaufbereitungseinrichtungen werden als elektronische Schaltungen ausgeführt und können daher kostengünstig hergestellt und verhältnismäßig leicht an den jeweiligen Anwendungsfall angepasst werden. Darüber hinaus können durch spezielle Maßnahmen bei der Signalaufbereitungseinrichtung unerwünschte Einflüsse (zum Beispiel Temperatureinfluss) kompensiert und Störungen des Messsignals (zum Beispiel Rauschen) unterdrückt werden, wodurch eine höhere Genauigkeit erzielt wird.

Aus der DE 197 01 310 A1 ist eine Vorrichtung zur Datenübertragung zwischen einem Messwertaufnehmer und einer Verarbeitungseinheit, die durch ein oder mehrere Signal-Übertragungsleitungen miteinander verbunden sind, bekannt, die eine Vergleicher-Einheit umfasst, die durch Vergleichen der an mindestens einer Signal-Übertragungsleitung anliegenden Signale mit vorgegebenen Referenzsignalen den jeweils aktiven Betriebsmodus identifiziert. Dabei weist der Messwertaufnehmer eine Signalverarbeitungsstufe auf, die insbesondere Umschaltmittel aufweist, die eine Umschaltung zwischen unterschiedlichen Messmodi ermöglicht.

Allerdings kann bei diesen Sensoren bedingt durch die der Erzeugung des Messsignals nachfolgenden Signalbearbeitung in der Signalaufbereitungseinrichtung eine Verfälschung des Messsignals insbesondere im Hinblick auf die zeitliche Struktur auftreten. Die führt beispielsweise bei periodischen oder quasiperiodischen Messsignalen und/oder bei Auswertung des Messsignals mittels Schwellwertvergleichs zu Ungenauigkeiten beim Umschaltpunkt und beim Phasenverhalten.

Der Erfindung liegt daher die Aufgabe zugrunde, einen Sensor zu schaffen, der diese Nachteile nicht aufweist.

Diese Aufgabe wird durch die im unabhängigen Patentanspruch 1 genannten Merkmale gelöst. Ausgestaltungen und Weiterbildungen des Erfindungsgedankens sind Gegenstand abhängiger Ansprüche.

Der erfindungsgemäße Sensor zeichnet sich aus durch eine hohe Umschaltpunkt- und Phasengenauigkeit bei dennoch geringem schaltungstechnischen Aufwand. Des Weiteren ist bei dem erfindungsgemäßen Sensor eine Eichung ohne größeren Aufwand möglich.

Erreicht wird dies bei einem Sensor der eingangs genannten Art insbesondere dadurch, daß die Signalaufbereitungseinrichtung Mittel zur frequenzabhängigen Betriebsmodusumschaltung aufweist, wobei die Schalteinrichtung zur Erfassung niedrigerer Signal-Frequenzen nach dem Chupperprinzip im geschalteten Betriebsmodus und zur Erfassung hoher Frequenzen im kontinuierlichen Betriebsmodus betrieben wird.

Wenn die Signalaufbereitungseinrichtung getaktete digitale Schaltungsteile umfaßt, erfolgt bevorzugt deren Taktung zur Erfassung niedriger Frequenzen durch ein Taktsignal mit konstanter Frequenz und zur Erfassung hoher Frequenzen durch ein dem Ausgangssignal entsprechendes Signal.

Es kann zudem vorgesehen werden, daß die Signalaufbereitungseinrichtung eine Schalteinrichtung zum Umschalten der Phasenlage des Meßsignals aufweist. Insbesondere bei einem Umschalten zwischen null Grad und 180 Grad mit anschließender Mittelwertbildung können Offsetfehler vorteilhafterweise weitgehend eliminiert werden.

Bevorzugt hat mindestens eine der Schalteinrichtungen eine Hysterese, wobei die Hysterese durch ein Steuersignal einstellbar ist. Die Steuerung erfolgt bevorzugt durch eine mit der Signalaufbereitungseinrichtung verbundene Steuereinrichtung, die aus dem (aufbereiteten Meßsignal das Steuersignal erzeugt. Alternativ oder zusätzlich kann vorgesehen werden, daß die Signalaufbereitungseinrichtung mit einem Offset beaufschlagt ist, der durch ein gesondertes oder das gleiche Steuersignal der Steuereinrichtung einstellbar ist.

Dabei kann ein Rampendetektor vorgesehen werden, der mit der Steuereinrichtung verbunden ist und der von dieser das Steuersignal erhält, um daraus ein weiteres Ausgangssignal zu erzeugen.

Die Steuereinrichtung kann das Steuersignal beispielsweise durch Mittelwertbildung aus dem Ausgangssignal der Auswerteeinrichtung gewinnen. Alternativ kann dies auch dadurch erreicht werden, daß die Steuereinrichtung das Steuersignal durch Auswertung des Medians beim Ausgangssignal des Sensors, durch Auswertung der Minima und Maxima des Ausgangssignals, durch Auswertung des Tastverhältnisses beim Ausgangssignal und durch Auswahl entsprechender Werte aus einer beispielsweise in einem Speicher abgelegten Tabelle erfolgen.

Die Signalaufbereitung der Meßsignale selbst kann dabei durch Mittelwertbildung oder gefilterte Spitzenwerterfassung vorgenommen werden.

Die Erfindung wird nachfolgend anhand der in den Figuren der Zeichnung dargestellten Ausführungsbeispiele näher erläutert. Es zeigt:
- Figur 1: eine erste Ausführungsform eines erfindungsgemäßen Sensors mit einem digitalen Schaltungsteil,
- Figur 2: eine zweite Ausführungsform eines erfindungsgemäßen Sensors mit zwei Schalteinrichtungen und
- Figur 3: eine dritte Ausführungsform eines erfindungsgemäßen Sensors mit ebenfalls zwei Schalteinrichtungen.

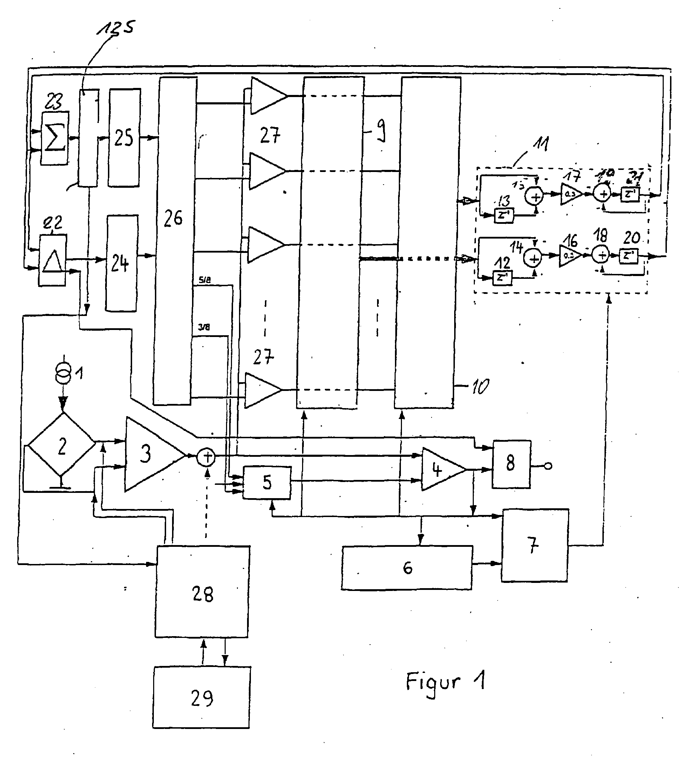

Bei der in Figur 1 gezeigten Ausführungsform eines erfindungsgemäßen Sensors ist als Wandlereinrichtung eine aus einer Stromquelle 1 gespeiste Hall-Platte 2 zur Erfassung von Magnetfeldern vorgesehen. Der Hall-Platte 2 ist ein Verstärker 3 (zum Beispiel ein Operationsverstärker oder ein Transkonduktanzverstärker) nachgeschaltet, der das Ausgangssignal der Hall-Platte 2 verstärkt und für eine Impedanzanpassung sorgt. Der Ausgang des Verstärkers 3 ist mit einem Eingang eines Komparators 4 gekoppelt, dessen anderer Eingang mit dem Ausgang einer Schaltermatrix 5 verbunden ist. Der Komparators 4 steuert über das zwei Signalzustände umfaßende Signal an seinem Ausgang die Schaltermatrix 5 sowie einen Oszillator 6, einen Taktgeber 7 und einen Schaltverstärker 8. Die Steuerung des Oszillators 6 erfolgt dabei derart, daß bei hohen Frequenzen des Rechtecksignals am Ausgang des Komparators 4 der Oszillator 6 abgeschaltet ist. Der zusätzlich auch von dem Oszillator 6 angesteuerte Taktgeber 7 wird durch den Komparator 4 so gesteuert, daß er bei hohen Frequenzen des Rechtecksignals am Ausgang des Komparators 4 einen Takt mit eben dieser hohen Frequenz erzeugt, während er bei niedrigen Frequenzen einen Takt mit der Frequenz des Oszillators 6 abgibt. Der Schaltverstärker 8 schließlich überträgt bei hohen Frequenzen des Rechtecksignals am Ausgang des Komparators 4 zu seinem Ausgang, während er bei niedrigen Frequenzen ein an ihm zudem anliegendes Direktschaltsignal, auf das später noch eingegangen wird, zu seinem Ausgang durchschaltet.

Darüber hinaus steuert der Komparator 4 zwei auf Basis des Thermometer-Codes operierende Codierer 9, 10 und zwar derart, daß einer der beiden Codierer 9, 10 (zum Beispiel der Codierer 9) durch die steigenden Flanken und der andere der beiden Codierer 9, 10 (zum Beispiel der Codierer 10) durch die fallenden Flanken (oder umgekehrt) zurückgesetzt wird. Den Ausgängen der beiden Codierer 9, 10 ist eine digitale Rechenstufe 11 nachgeschaltet, die zwei identsch ausgeführte, jeweils den Codierern 9, 10 zugeordnete Signalzweige aufweist. Jeder dieser Signalzweige dient der digitalen Filterung und umfaßt ein mit dem Ausgangssignal des jeweiligen Codierers 9, 10 beaufschlagtes Verzögerungsglied 12 bzw. 13 sowie einen Addierer 14 bzw. 15, dessen einer Eingang jeweils an das Verzögerungsglied 12 bzw. 13 angeschlossen ist und dessen anderer Eingang mit dem Ausgangssignal des jeweiligen Codierers 9, 10 angesteuert wird. Den Addierern 14, 15 sind jeweils Koeffizientenglieder 16 bzw. 17 (mit beispielsweise jeweils einem Koeffizienten gleich 0,5) nachgeschaltet. Diese wiederum sind ausgangsseitig jeweils auf einen Eingang eines Addierers 18 bzw. 19 geführt, dessen jeweils anderer Eingang und dessen Ausgang unter Zwischenschaltung eines Verzögerungsglieds 20, 21 miteinander gekoppelt sind. Am Ausgang der Verzögerungsglieder 20, 21 sind die Ausgangssignale der Rechenstufe 11 abgreifbar. Die Rechenstufe 11 führt dabei jeweils eine Differenzierung (Differentialbildung) mit anschließender gewichteter Akkumulierung (Integralbildung) aus. In gleicher Weise sind aber auch eine Differenzierung mit anschließender Summierung, eine Differenzierung alleine oder eine Akkumulierung alleine geeignet.

Die beiden Ausgangssignale der Rechenstufe 11 werden sowohl einer Differenzstufe 22 zur Bildung der Differenz beider Ausgangssignale als auch einer Addierstufe 23 zur Bildung der Summe beider Ausgangssignale zugeführt. Der Differenzstufe 22 ist dabei ein Digital-Analog-Umsetzer 24 direkt und der Addierstufe 23 ist unter Zwischenschaltung eines digitalen Tiefpaßfilters 135 ein Digital-Analog-Umsetzer 25 nachgeschaltet. Am Ausgang des Digital-Analog-Umsetzers 24 steht somit ein analoges Signal (Spannung oder Strom) zur Verfügung, das der Amplitude des von der Hall-Platte 2 bereitgestellten Signals entspricht, während das analoge Signal (Spannung oder Strom) am Ausgang des Digital-Analog-Umsetzers 25 dem überlagerten Offset entspricht. Von diesen beiden analogen Signalen und zudem in geeigneter Weise von der Temperatur hängen nun Referenzsignale (in Form von Strömen oder Spannungen) ab, die von einer Referenzstufe 26 erzeugt werden.

Zwei der von der Referenzstufe 26 erzeugten Referenzsignale werden der Schaltermatrix 5 zugeführt und die restlichen Referenzsignale werden an jeweils einen Eingang mehrer Komparatoren 27 angelegt, deren jeweils andere Eingänge mit dem Ausgang des Verstärkers 3 gekoppelt sind. Die Komparatoren 27 vergleichen das dem Ausgangssignal der Hall-Platte 2 entsprechende Ausgangssignal des Verstärkers 3 mit dem jeweiligen Referenzsignal und erzeugen davon abhängig an ihrem Ausgang einen von zwei möglichen logischen Signalzuständen. Die Referenzsignale sind dabei derart ausgestaltet, daß sie im Hinblick auf die Komparatoren 27 in ihrer Wertigkeit von Komparator zu Komparator stetig ansteigen, während die beiden der Schaltermatrix 5 zugeführten Referenzsignale um den Mittelwert (d.h. oberhalb und unterhalb des Mittelwertes) des durch die übrigen Referenzsignale vorgegebenen Bereichs angeordnet sind (zum Beispiel bei 3/8 und 5/8 des Maximalwertes).

Dabei sind die Ausgänge der Komparatoren 27, die Referenzsignale mit höherer Wertigkeit erhalten, mit den Eingängen des Codierers 9 und die Ausgänge der Komparatoren 27, die Referenzsignale mit niedriger Wertigkeit erhalten, mit den Eingängen des Codierers 10 verbunden. Bei der Schaltermatrix 5 wird je nach logischem Zustand des Signals am Ausgang des Komparators 4 entweder das eine Referenzsignal (3/8) oder das andere Referenzsignal (5/8) auf den Ausgang aufgeschaltet. Die Schaltermatrix 5 kann darüber hinaus beim Einschalten der Spannungsversorgung ein zusätzliches Steuersignal erhalten, mit dem beispielsweise bestimmte Startbedingungen eingestellt werden.

Des Weiteren ist ein Digital-Analog-Umsetzer 28 vorgesehen, dessen Ausgangssignal dem Eingangssignal des Verstärkers additiv/subtraktiv überlagert wird. Das Ausgangssignal des Digital-Analog-Umsetzer 28 wird zum einen bestimmt durch einen in einem Speicher 29 abgelegten Eichwert und zum anderen durch Überlaufsignale und Unterlaufsignale des digitalen Tiefpaßfilters 24. Schließlich wird das Ausgangssignal (oder ein weiteres Ausgangssignal) der Differenzstufe 22 dem Schaltverstärker 8 zugeführt, um diesen bei hohen Frequenzen damit direkt schalten zu können.

Die Funktionsweise des in Figur 1 dargestellten Sensors beruht darauf, daß ein von der Hall-Platte 2 erzeugtes Signal mittels des Verstärkers 3 verstärkt wird, wobei der Offset des Verstärkers 3 durch den Digital-Analog-Umsetzer 28 und den Speicher 29 in Verbindung mit dem digitalen Tiefpaßfilter 135 zum einen fest eingestellt werden kann, um beispielsweise eine Grundeinstellung und/oder eine Anpassung an die Umgebung des Sensors zu erreichen. Zum anderen wird eine Offset-Regelung in einem gewissen Bereich um den festeingestellten Offset-Wert erzielt durch die Abhängigkeit des Offsets vom Zählerstand des digitalen Filters 135 erzielt. Durch diese Maßnahmen kann erreicht werden, daß der Offset sich innerhalb eines optimalen, von dem Gesamtsystem beherrschbaren Bereichs bleibt. Eine additve/subtraktive Verknüpfung des Aussgangsignals der Hall-Platte 2 mit dem Aussgangsignals des Digital-Analog-Umsetzers 28 kann dabei zusätzlich oder alternativ auch am Ausgang des Verstärkers 3 erfolgen.

Das beliebig geformte Ausgangssignal wird danach durch Schwellwertvergleich mittels Komparator 4 in ein entsprechendes Rechtecksignal umgewandelt. Mit diesem dem Ausgangssignal entsprechenden Signal erfolgt dann die Steuerung der Codierer 9 und 10, der Schaltermatrix 5, des Oszillators 6, des Taktgebers 7 und des Schaltverstärkers 8. Komparator 4, Oszillator 6, Taktgeber 7 und Schaltverstärker 8 sorgen zusammen dafür, daß die Signalaufbereitungseinrichtung bei niedrigeren Frequenzen im geschalteten Betriebsmodus (Chopper-Modus)und bei hohen Frequenzen im zeitkontinuierlichen Betriebsmodus (Continuous-Time-Modus) arbeitet. Der unterschiedliche Takt wirkt primär auf die Rechenstufe 11, die das Filter eines ansonsten nicht-getakteten digitalen Spitzenwertdetektors bildet, welcher wiederum die nicht getakteten Komparatoren 27 und die nicht getakteten Codierer 9, 10 umfasst. Durch die Änderung der Taktfrequenz der Recheneinrichtung wird das Zeitverhalten der gesamten Signalaufbereitungseinrichtung verändert.

Durch getrennte Auswertung von Differenz- und Summensignal (Differential-Mode-Signal, Common-Mode-Signal) werden das eigentliche Meßsignal der Hall-Platte 2 und der Offset-Anteil voneinander getrennt und können so getrennt weiterverarbeitet werden. Die dabei verwendeten Referenzsignale werden bevorzugt temperaturabhängig ausgestaltet derart, daß ihr Verhalten das Temperaturverhalten der restlichen Signalaufbereitungseinrichtung kompensiert. Die Referenzsignale werden dann jeweils den zugehörigen parallelen Komparatoren 27 und der Schaltermatrix 5 zugeführt. Insgesamt wird also bei der Auswertung des von der Hall-Platte 2 gelieferten Signals eine hohe Amplituden- und Phasentreue erreicht und damit eine hohe Umschaltpunkt- und Phasengenauigkeit insbesondere bei höherfrequenten Wechselsignalen wie beispielsweise bei der magnetischen Erfassung von Drehzahlen erzielt.

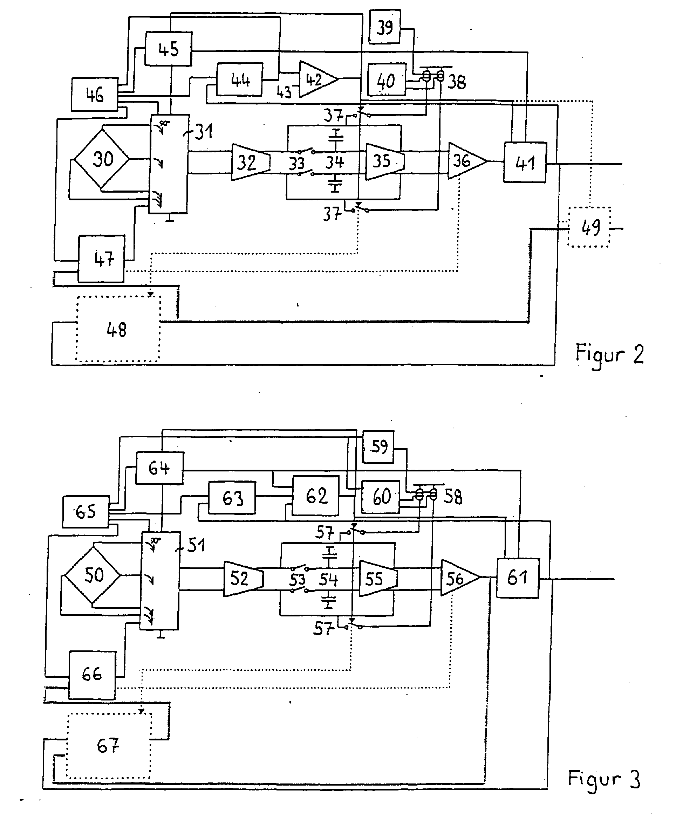

Bei dem in Figur 2 gezeigten Ausführungsbeispiel ist eine Hall-Plattenanordnung 30 vorgesehen mit einer einzigen Hall-Platte oder mit mehreren parallelgeschalteten Hall-Platten. Durch eine Mehrzahl parallelgeschalteter Hall-Platten, deren Ausrichtung und/oder jeweilige Stromrichtung unterschiedlich ist, läßt sich die Genauigkeit erhöhen und der resultierende Offsetfehler verringern. Ferner werden auch richtungsabhängige Einflüsse durch das Kristallgitter verkleinert. Bei der Hall-Plattenanordnung 30 dienen immer zwei Anschlüsse als Eingangsanschlüsse für den Hall-Versorgungsstrom und zwei Anschlüsse als Ausgangsanschlüsse. Eingangsanschlüsse und Ausgangsanschlüsse sind jeweils mit einer Schaltermatrix 31 verbunden. Die Schaltermatrix 31 bewirkt eine Umschaltung der Stromrichtung um 90 Grad innerhalb der angeschlossenen Hall-Platten. Es wären aber auch beispielsweise 180 Grad oder 360 Grad ebenso möglich. Dabei ist aber die Umschaltung der Stromrichtung um 90 Grad besonders zweckmäßig, weil sich die resultierenden Offsetfehler der Hall-Platten in der einen Stromrichtung zur Hall-Spannung addieren und in der um 90 Grad gedrehten Stromrichtung dagegen subtrahieren.

Die Schaltermatrix 31 hat einen symmetrischen Ausgang, dem ein Spannung-Strom-Umsetzer 32 nachgeschaltet ist. Der symmetrische Ausgang des Spannung-Strom-Umsetzers 32 wiederum ist unter Zwischenschaltung eines Schalterpaares 33 mit dem symmetrischen Eingang eines Spannung-Strom-Umsetzers 35 gekoppelt. Der symmetrische Eingang des Spannung-Strom-Umsetzers 35 ist mit einem Kondensatorpaar 34 an ein Bezugspotential angeschlossen. Die symmetrischen Ausgänge der Spannung-Strom-Umsetzer 32 und 35 sind miteinander verschaltet und auf den symmetrischen Eingang eines Komparators oder Spannung-Verstärkers 36 geführt. Außerdem werden zwei Referenzströme über ein Schalterpaar 37 an die durch die symmetrischen Ausgänge der beiden Spannung-Strom-Umsetzer 32 und 35 sowie den symmetrischen Eingang des Spannungs-Verstärkers 36 gebildeten Knotenpunkte geführt. Die beiden Referenzströme werden durch ein Stromquellenpaar 38 erzeugt, wobei eine der Stromquellen durch eine Common-Mode-Steuerung 39 und die andere durch eine Differential-Mode-Steuerung 40 gesteuert wird. Dem Strom-Spannung-Umsetzer 36 folgt schließlich eine geschaltete Ausgangsstufe 41, an deren Ausgang das Ausgangssignal des Sensors abgreifbar ist.

Die Steuerung der Schalterpaare 33 und 37 erfolgt im Gegentakt durch das Ausgangssignal eines Komparators 42, dessen einer Eingang mit einem Referenzsignal 43 (zum Beispiel Referenzstrom oder Referenzpotential) beaufschlagt ist und dessen anderer Eingang ebenso wie ein Taktgeber 45 mit dem Ausgang eines Frequenz-Strom-Umsetzers 44 gekoppelt ist. Der Frequenz-Strom-Umsetzers 44 wird seinerseits durch das Ausgangssignal des Sensors, das am Ausgang der geschalteten Ausgangsstufe 41 abgreifbar ist, gesteuert. Die geschaltete Ausgangsstufe 41 ist mit dem Signal am Ausgang des Komparators 42 und einem von dem Taktgeber 45 erzeugten Taktsignal beaufschlagt. Der Taktgeber 45 steuert außerdem noch die Schaltermatrix 31 und erhält selbst das Signal am Ausgang des Komparators 42 sowie ein temperaturabhängiges Biassignal. Das Biassignal (zum Beispiel Strom oder Spannung) für den Taktgeber 45 wird von einer Biaseinheit 46 erzeugt, die zudem auch temperaturabhängige Biassignale für die Schaltermatrix 31, den Frequenz-Strom-Umsetzer 44 und/oder den Komparator 42 sowie für einen Offset- und Hysteresesignalgenerator 47 generiert. Der Offset- und Hysteresesignalgenerator 47 erzeugt ein durch ein Steuersignal veränderbares Offset- und Hysteresesignal für die Schaltermatrix 31 und gegebenfalls auch für den Komparator oder Spannungs-Verstärker 36. Das Steuersignal für den Offset- und Hysteresesignalgenerator 47 wird von einer Steuereinheit 48 aus dem am Ausgang der geschalteten Ausgangsstufe 41 abgreifbaren Ausgangssignal des Sensors gewonnen. Die Steuereinheit 48 enthält einen löschbaren Permanentspeicher (EEPROM), in dem bei einer Eichung bestimmte Werte abgelegt worden sind, die bestimmten Werten des Ausgangssignals am Ausgang der geschalteten Ausgangsstufe 41 zugeordnet sind und die dem Ausgangsssignal (und der Eichung) entsprechend als Steuersignal an die Schaltermatrix 31 ausgeben werden. Gegebenfalls kann der Steuereinheit 41 zudem auch das Ausgangssignal des Komparators 42 zugeführt werden. Schließlich kann ein alternatives Ausgangssignal des Sensors erzeugt werden, indem das Steuersignal am Ausgang der Steuereinheit 41 dem Rampendetektor 49 zugeführt wird, der daraus das alternative Ausgangssignal erzeugt. Der Rampendetektor 49 kann dabei zusätzlich durch das Ausgangssignal des Komparators 42 gesteuert werden.

Die Funktionsweise der Ausführungsform nach Figur 2 beruht darauf, daß durch die Hall-Platten 30 erzeugte Signale durch die anschließende Schaltermatrix 31 und Mittelwertbildung im seitlichen Mittel weitesgehend vom überlagerten Offset befreit werden. Die Anordnung zur Mittelwertbildung enthält die Spannung-Strom-Umsetzer 32 und 35, Schalterpaare 33 und 37, Kondesatorpaar 34, Spannung-Verstärker 36 und das Stromquellenpaar 38. Bei der Anordnung zur Mittelwertbildung auftretender Offset wird durch entsprechende Steuerung des Stromquellenpaares 38 mittels Common-Mode-Steuerung 39 und Differential-Mode-Steuerung 40 eliminiert. Der Taktgeber 45, der Frequenz-Strom-Umsetzer 44 sowie der Komparator 42 überwachen dabei die Frequenz des Ausgangssignals und schalten dementsprechend von einer Taktung mit einer festen Frequenz (erzeugt durch den Taktgeber 45) in ein permanentes Durchschalten der Ausgangsstufe 41 um derart, daß bei niedrigen Frequenzen das Taktsignal und bei hohen Frequenzen das Ausgangssignal des Komparators 42 die Ausgangsstufe 41 steuert. Übersteigt der Strom am Ausgang des Frequenz-Strom-Umsetzers 44 das Referenzsignal 43 kippt der Komparator 42 um und trennt damit den Taktgeber 45 von der Ausgangstufe 41, die dann durch das Ausgangssignal des Komparators 42 permanent durchgeschaltet wird.

Schließlich werden die Biassignale bevorzugt temperaturabhängig so ausgestaltet, daß ihr Verhalten das Temperaturverhalten der übrigen Teile der Signalaufbereitungseinrichtung kompensiert. Um beispielsweise eine Grundeinstellung und/oder eine Anpassung an die Umgebung des Sensors zu erreichen, und zum anderen eine Offset-Regelung in gewissen Grenzen zu erzielen, wird zudem eine Offset-Regelung bestehend aus dem Offset- und Hysteresesignalgenerator 47 und der Steuereinheit 48 vorgesehen. Anstelle des Einsatzes eines Speichers kann auch eine Signalverarbeitungseinheit vorgesehen werden die beispielsweise eine Mittelwertbildung, eine Nullpunktdetektion, eine Minimum-Maximum-Auswertung oder eine Tastverhältnisauswertung durchführt und daraus das Steuersignal für den Offset-und Hysteresesignalgenerator 47. Durch diese Maßnahmen kann erreicht werden, daß der Offset sich innerhalb eines optimalen, für das Gesamtsystem geeigneten Bereich bleibt. Insgesamt wird also bei der Auswertung des von den Hall-Platten 30 gelieferten Signals eine hohe Amplituden- und Phasentreue erreicht und damit wiederum eine hohe Umschaltpunkt-und Phasengenauigkeit in einem weiten Frequenzbereich erzielt.

Bei dem in Figur 3 gezeigten Ausführungsbeispiel ist wie bei den vorausgehenden Ausführungsbeispielen vorteilhafterweise eine Hall-Plattenanordnung 50 mit mehreren (beispielsweise zwei) parallelgeschalteten Hall-Platten vorgesehen, um die Genauigkeit zu erhöhen und den resultierenden Offsetfehler zu verringern. Eine Schaltermatrix 51 bewirkt mittels einer Schalteinrichtung eine Umschaltung der Stromrichtung in 90 Grad-Schritten innerhalb der angeschlossenen Hall-Platten.

Die Schaltermatrix 51 hat einen symmetrischen Ausgang, dem ein Spannung-Strom-Umsetzer 52 nachgeschaltet ist. Der symmetrische Ausgang des Spannung-Strom-Umsetzers 52 wiederum ist unter Zwischenschaltung eines Schalterpaares 53 mit dem symmetrischen Eingang eines Spannung-Strom-Umsetzers 55 gekoppelt. Der symmetrische Eingang des Spannung-Strom-Umsetzers 55 ist mit einem Kondensatorpaar 54 an ein Bezugspotential geklemmt. Die symmetrischen Ausgänge der Spannung-Strom-Umsetzer 52 und 55 sind miteinander verschaltet und auf den symmetrischen Eingang eines Spannung-Verstärkers 56 geführt. Außerdem werden zwei Referenzströme über ein Schalterpaar 57 an die durch die symmetrischen Ausgänge der beiden Spannung-Strom-Umsetzer 52 und 54 sowie den symmetrischen Eingang des Komparators oder Spannung-Verstärkers 56 gebildeten Knotenpunkte geführt. Die beiden Referenzströme werden durch ein Stromquellenpaar 58 erzeugt, wobei eine der Stromquellen durch eine Common-Mode-Steuerung 59 und die andere durch eine Differential-Mode-Steuerung 60 gesteuert wird. Dem Spannung-Verstärker 56 folgt schließlich eine geschaltete Ausgangsstufe 51, an deren Ausgang das Ausgangssignal des Sensors abgreifbar ist.

Die Steuerung der Schalterpaare 53 und 57 erfolgt im Gegentakt durch das Ausgangssignal eines Zeit-Frequenz-Komparators 62, bei dem ein erster Eingang mit einem Taktsignal angesteuert wird, ein zweiter Eingang mit dem am Ausgang der Ausgangsstufe 51 abgreifbaren Ausgangssignal des Sensors beaufschlagt ist und der dritte Eingang mit dem Ausgang einer analogen Verzögerungseinrichtung 64 gekoppelt ist. Die analoge Verzögerungseinrichtung 64 wird ihrerseits durch das Ausgangssignal des Sensors, das am Ausgang der geschalteten Ausgangsstufe 61 abgreifbar ist, gesteuert. Die geschaltete Ausgangsstufe 61 ist mit dem Signal am Ausgang des Komparators 62 und zudem - wie auch der Zeit-Frequenz-Komparator 62 - mit dem von einem Taktgeber 65 erzeugten Taktsignal beaufschlagt. Der Taktgeber 65 steuert außerdem noch die Schaltermatrix 51 und wird selbst durch das Signal am Ausgang des Zeit-Frequenz-Komparators 62 sowie ein temperaturabhängiges Biassignal gesteuert. Das Biassignal (zum Beispiel Strom oder Spannung) für den Taktgeber 65 wird von einer Biaseinheit 66 erzeugt, die zudem auch temperaturabhängige Biassignale für die Schaltermatrix 51, den Frequenz-Strom-Umsetzer 64 und/oder den Komparator 62, die Common-Mode-Steuerung 59, die Differential-Mode-Steuerung 60 sowie für einen Offset-und Hysteresesignalgenerator 67 generiert. Der Offset- und Hysteresesignalgenerator 67 erzeugt ein durch ein Steuersignal veränderbares Offset- und Hysteresesignal für die Schaltermatrix 51 und gegebenfalls auch für den Spannungs-Verstärker 56. Das Steuersignal für den Offset- und Hysteresesignalgenerator 67 wird von einer Steuereinheit 68 aus dem am Ausgang der geschalteten Ausgangsstufe 61 abgreifbaren Ausgangssignal des Sensors gewonnen. Die Steuereinheit 68 enthält einen löschbaren Permanentspeicher (EEPROM), in dem bei einer Eichung bestimmte Werte abgelegt worden sind. Diese sind wiederum bestimmten Werten des Ausgangssignals am Ausgang der geschalteten Ausgangsstufe 61 zugeordnet und werden dem Ausgangsssignal (und der Eichung) entsprechend als Steuersignal an die Schaltermatrix 51 ausgeben werden. Gegebenfalls kann der Steuereinheit 61 zudem auch das Ausgangssignal des Zeit-Frequenz-Komparators 62 zugeführt werden.

Die Funktionsweise der Ausführungsform nach Figur 3 beruht darauf, daß wiederum die durch die Hall-Platten 50 erzeugten Signale durch die anschließende Schaltermatrix 51 und Mittelwertbildung weitesgehend vom überlagerten Offset befreit werden. Die Anordnung zur Mittelwertbildung enthält Spannung-Strom-Umsetzer 52 und 55, Schalterpaare 53 und 57, ein Kondesatorpaar 54, einen Spannung-Verstärker 56 und ein Stromquellenpaar 58. Ein bei der Anordnung zur Mittelwertbildung auftretender Offset wird durch entsprechende Steuerung des Stromquellenpaares 58 mittels Common-Mode-Steuerung 59 und Differential-Mode-Steuerung 60 eliminiert. Der Taktgeber 65, das analoge Verzögerungseinrichtung 64 sowie der Zeit-Frequenz-Komparator 62 überwachen dabei die Frequenz des Ausgangssignals und schalten dementsprechend von einer Taktung mit einer festen Frequenz (erzeugt durch den Taktgeber 65) auf ein permanentes Durchschalten der Ausgangsstufe 61 um derart, daß bei niedrigen Frequenzen des Ausgangssignals das Taktsignal und bei hohen Frequenzen des Ausgangssignals das Ausgangssignal des Komparators 62 die Ausgangsstufe 61 steuert. Übersteigt die Frequenz des Signals am Ausgang der Ausgangsstufe 61 das Taktsignal vom Taktgeber 65, kippt der Zeit-Frequenz-Komparator 62 um und trennt damit den Taktgeber 65 von der Ausgangstufe 61, die dann für das Ausgangssignal des Spannungs-Verstärkers 56 permanent durchgeschaltet und damit gleichsam "transparent" wird.

Schließlich werden die Biassignale bevorzugt temperaturabhängig so ausgestaltet, daß ihr Verhalten das Temperaturverhalten der übrigen Teile der Signalaufbereitungseinrichtung kompensiert. Um beispielsweise eine Grundeinstellung und/oder eine Anpassung an die Umgebung des Sensors zu erreichen, und zum anderen eine Offset-Regelung in gewissen Grenzen zu erzielen, wird zudem eine Offset-Regelung bestehend aus dem Offset- und Hysteresesignalgenerator 67 und der Steuereinheit 68 vorgesehen. Anstelle des Einsatzes eines Speichers kann wiederum auch eine Signalverarbeitungseinheit vorgesehen werden, die beispielsweise eine Mittelwertbildung, eine Nullpunktdetektion, eine Minimum-Maximum-Auswertung oder eine Tastverhältnisauswertung durchführt und daraus das Steuersignal für den Offset- und Hysteresesignalgenerator 67 generiert. Durch diese Maßnahmen kann erreicht werden, daß der Offset sich innerhalb eines optimalen, für das Gesamtsystem geeigneten Bereich bleibt. Insgesamt wird also bei der Auswertung des von den Hall-Platten 50 gelieferten Signals eine hohe Amplituden- und Phasentreue erreicht und damit wiederum eine hohe Umschaltpunkt- und Phasengenauigkeit in einem zweiten Frequenzbereich erzielt.

Obwohl die Ausführungsbeispiele nur Hall-Platten als Wandlereinrichtungen verwenden kann in gleicher Weise jeder andere Typ von Wandlereinrichtung in gleicher Weise bei einem erfindungsgemäßen Sensor verwendet werden.

## Patentansprüche

1. Sensor mit einer Wandlereinrichtung (1,2; 30; 50) zum Umwandeln einer an ihr anliegenden physikalischen Größe in ein entsprechendes elektrisches Messsignal und einer der Wandlereinrichtung nachgeschalteten Signalaufbereitungseinrichtung (3 bis 29; 31 bis 49; 50 bis 68) zum Erzeugen eines Ausgangssignals aus dem Messsignal, wobei die Signalaufbereitungseinrichtung mindestens eine Schalteinrichtung (5; 31, 33, 37; 51, 53, 57) zur Offsetkompensation aufweist,
**dadurch gekennzeichnet, dass** die Signalaufbereitungseinrichtung (3 bis 29; 31 bis 49; 50 bis 68) Mittel (8 bis 27; 41 bis 46; 61 bis 66) zur frequenzabhängigen Betriebsmodusumschaltung aufweist, wobei die Schalteinrichtung (5; 31, 33, 37; 51, 53, 57) bei niedrigen Frequenzen im Chopper-Modus und bei hohen Frequenzen im Continuous-Time-Modus betrieben wird.

2. Sensor nach Anspruch 1,
**dadurch gekennzeichnet, daß** die Signalaufbereitungseinrichtung getaktete Schaltungsteile umfaßt, deren Taktung bei niedrigen Frequenzen durch ein Taktsignal mit konstanter Frequenz und bei hohen Frequenzen durch ein dem Ausgangssignal entsprechendes Signal erfolgt.

3. Sensor nach Anspruch 1 oder 2,
**dadurch gekennzeichnet, daß** die Signalaufbereitungseinrichtung mindestens eine Schalteinrichtung zum Umschalten der Phasenlage eines mit der Wandlereinrichtung verkoppelten Meßsignals aufweist.

4. Sensor nach einem der vorherigen Ansprüche,
**dadurch gekennzeichnet, daß** mindestens eine Schalteinrichtung eine Hysterese hat,
- daß die Hysterese durch ein Steuersignal einstellbar ist, und
- daß eine mit der Signalaufbereitungseinrichtung verbundene Steuereinrichtung vorgesehen ist, die aus dem Meßsignal das Steuersignal erzeugt.

5. Sensor nach einem der vorherigen Ansprüche,
**dadurch gekennzeichnet, daß** die Signalaufbereitungseinrichtung mit einem Offset beaufschlagt ist, der durch ein Steuersignal einstellbar ist.

6. Sensor nach Anspruch 4,
**dadurch gekennzeichnet, daß** Hysterese und Offset durch ein gemeinsames Steuersignal einstellbar sind.

7. Sensor nach einem der vorherigen Ansprüche,
**dadurch gekennzeichnet, daß** ein Rampendetektor vorgesehen ist, der mit der Steuereinrichtung verbunden ist, der von dieser das Steuersignal erhält und der daraus ein weiteres Ausgangssignal erzeugt.

8. Sensor nach einem der Ansprüche 4 bis 7,
**dadurch gekennzeichnet, daß** das Steuersignal durch Mittelwertbildung aus dem Ausgangssignal der Auswerteeinrichtung erzeugt ist.

9. Sensor nach einem der Ansprüche 4 bis 7,
**dadurch gekennzeichnet, daß** die Steuereinrichtung das Steuersignal durch Auswertung des Medians beim Ausgangssignal der Auswerteeinrichtungs erzeugt.

10. Sensor nach einem der Ansprüche 4 bis 7,
**dadurch gekennzeichnet, daß** die Steuereinrichtung das Steuersignal durch Auswertung der Minima und Maxima beim Ausgangssignal der Auswerteeinrichtung erzeugt.

11. Sensor nach einem der Ansprüche 4 bis 7,
**dadurch gekennzeichnet, daß** die Steuereinrichtung das Steuersignal durch Auswertung des Tastverhältnisses beim Ausgangssignal der Auswerteeinrichtung erzeugt.

12. Sensor nach einem der Ansprüche 4 bis 7,
**dadurch gekennzeichnet, daß** zur Erzeugung des Steuersignals eine durch Eichung ermittelte Wertetabelle in der Steuereinrichtung abgelegt ist, wobei das Ausgangssignal der Auswerteeinrichtung zur Auswahl der Werte in der Tabelle vorgesehen ist.

13. Sensor nach einem der vorherigen Ansprüche,
**dadurch gekennzeichnet, daß** die Signalbearbeitungseinrichtung Mittel zur Mittelwertbildung aufweist, die durch das Meßsignal angesteuert werden.

14. Sensor nach einem der Ansprüche 1 bis 13,
**dadurch gekennzeichnet, daß** die Signalbearbeitungseinrichtung Mittel zur Spitzenwertdetektion aufweist, die durch das Meßsignal angesteuert werden.

## Claims

1. Sensor comprising a transducer device (1, 2; 30; 50) to convert a sensed physical quantity into a corresponding electrical measurement signal and
a signal processing device (3 to 29; 31 to 49; 50 to 68) downstream of the transducer device for generating an output signal from the measurement signal, the signal processing device including at least one switching device (5; 31, 33, 37; 51, 53, 57) for offset compensation, **characterized in that** the signal processing device (3 to 29; 31 to 49; 50 to 68) has means (8 to 27; 41 to 46; 61 to 66) for switching the operating mode of said switching device as a function of frequency, such that the switching device (5; 31, 33, 37; 51, 53, 57) is operated in the chopper-mode at low frequencies and in the continuous-time-mode at high frequencies.

2. Sensor according to claim 1, **characterized in that** the signal processing device comprises clocked circuit sections, that are clocked by a constant frequency clock pulse at low frequencies and by a signal corresponding to said sensor output signal at high frequencies.

3. Sensor according to claim 1 or 2, **characterized in that** the signal processing device has at least one switching device to switch over the phase of said measurement signal that is coupled to the transducer device.

4. Sensor according to anyone of the above claims, **characterized in that** at least one switching device includes a hysteresis,
- wherein the hysteresis can be adjusted by a control signal, and
- wherein a control unit, which is connected to the signal processing device and generates the control signal from the measurement signal, is provided.

5. Sensor according to anyone of the above claims, **characterized in that** the signal processing device is impinged by an offset, which can be adjusted by a control signal.

6. Sensor according to claim 4, **characterized in that** the hysteresis and offset can be adjusted by a common control signal.

7. Sensor according to anyone of the above claims, **characterized in that** a ramp detector, which is connected to the control unit, receives the control signal and generates a further output signal therefrom, is provided.

8. Sensor according to anyone of claims 4 to 7, **characterized in that** the control signal is generated by calculating average values of the output signal from the evaluation device.

9. Sensor according to anyone of claims 4 to 7, **characterized in that** the control unit generates the control signal by evaluating the median of the output signal from the evaluation device.

10. Sensor according to anyone of claims 4 to 7, **characterized in that** the control unit produces the control signal by evaluating the minima and maxima of the output signal from the evaluation device.

11. Sensor according to anyone of claims 4 to 7, **characterized in that** the control unit generates the control signal by evaluating the pulse-duty ratio of the output signal from the evaluation device.

12. Sensor according to anyone of claims 4 to 7, **characterized in that** for generating the control signal a look-up table of values, determined by calibration, is stored in the control unit, wherein the output signal from the evaluation device is provided for selecting the values in the table.

13. Sensor according to anyone of the above claims, **characterized in that** the signal processing device comprises means for forming averages, which are actuated by said measurement signal.

14. Sensor according to anyone of claims 1 to 13, **characterized in that** the signal processing device comprises means for detecting peak values, which are actuated by said measurement signal.

## Revendications

1. Capteur comportant une installation de conversion (1, 2 ; 30 ; 50) pour convertir une grandeur physique qui lui est appliquée en un signal électrique de mesure correspondant, ainsi qu'une installation de traitement de signal (3 - 29 ; 31 - 49 ; 50 - 68) en aval de l'installation de conversion pour générer un signal de sortie à partir du signal de mesure,
l'installation de traitement de signal comportant au moins une installation de commutation (5 ; 31, 33, 37 ; 51, 53, 57) pour compenser le décalage,
**caractérisé en ce que**
- l'installation de traitement de signal (3 - 29 ; 31 - 49 ; 50 - 68) comprend des moyens (8 - 27 ; 41 - 46 ; 61 - 66) pour une commutation de mode de fonctionnement en fonction de la fréquence,
- l'installation de commutation (5 ; 31, 33, 37 ; 51, 53, 57) fonctionnant aux fréquences basses en mode de hachage et aux fréquences élevées, en mode continu dans le temps.

2. Capteur selon la revendication 1,
**caractérisé en ce que**
l'installation de traitement de signal comporte des parties de commutation cadencées dont la cadence est assurée aux fréquences basses par un signal d'horloge de fréquence constante et aux fréquences élevées, par un signal correspondant au signal de sortie.

3. Capteur selon la revendication 1 ou 2,
**caractérisé en ce que**
l'installation de traitement de signal comporte au moins une installation de commutation pour commuter la phase d'un signal de mesure couplé par l'installation de conversion.

4. Capteur selon les revendications précédentes,
**caractérisé en ce qu'**
- au moins une installation de commutation présente une hystérésis,
- l'hystérésis est réglée par un signal de commande, et
- une installation de commande est reliée à l'installation de traitement de signal et génère le signal de commande à partir du signal de mesure.

5. Capteur selon les revendications précédentes,
**caractérisé en ce que**
l'installation de traitement de signal, reçoit un signal de décalage réglé par un signal de commande.

6. Capteur selon la revendication 4,
**caractérisé en ce que**
l'hystérésis et le décalage sont réglés par un signal de commande commun.

7. Capteur selon les revendications précédentes,
**caractérisé en ce qu'**
il est prévu un détecteur de rampe relié à l'installation de commande recevant de celle-ci le signal de commande pour en déduire un autre signal de sortie.

8. Capteur selon les revendications 4 à 7,
**caractérisé en ce que**
le signal de commande est généré par formation d'une valeur moyenne à partir du signal de sortie de l'installation d'exploitation.

9. Capteur selon les revendications 4 à 7,
**caractérisé en ce que**
l'installation de commande génère le signal de sortie par l'exploitation de la moyenne du signal de sortie de l'installation d'exploitation.

10. Capteur selon les revendications 4 à 7,
**caractérisé en ce que**
l'installation de commande génère le signal de commande par l'exploitation des minima et des maxima du signal de sortie de l'installation d'exploitation.

11. Capteur selon les revendications 4 à 7,
**caractérisé en ce que**
l'installation de commande génère le signal de commande par l'exploitation du rapport de travail pour le signal de sortie de l'installation d'exploitation.

12. Capteur selon les revendications 4 à 7,
**caractérisé en ce qu'**
un tableau de valeurs obtenues par tarage est enregistré dans l'installation de commande pour générer le signal de commande,
le signal de sortie de l'installation d'exploitation assurant la sélection des valeurs dans le tableau.

13. Capteur selon les revendications précédentes,
**caractérisé en ce que**
l'installation de traitement de signal comporte des moyens pour former une valeur moyenne, ces moyens étant commandés par le signal de mesure.

14. Capteur selon les revendications 1 à 13,
**caractérisé en ce que**
l'installation de traitement de signal comporte des moyens pour la détection d'une valeur de pointe, ces moyens étant commandés par le signal de mesure.
